# EUROPÄISCHE PATENTANMELDUNG

(11) **EP 0 873 950 A1**
(43) Veröffentlichungstag der Anmeldung: **28.10.1998**
(21) Anmeldenummer: 97106379.7
(22) Anmeldetag: 17.04.1997
(51) Int. Cl.: B65G 47/46, B65G 47/76

(54) **Verfahren zum Ausschleussen von Flaschen aus einer Förderbahn und Vorrichtung zum Durchführen des Verfahrens**

(71) Anmelder: Max Kettner GmbH & Co. KG, 81737 München (DE)
(72) Erfinder: Kelnhofer, Friedrich, 83098 Brannenberg (DE)

(57) **Zusammenfassung**

Um Gegenstände (1) von einer Transportstrecke (2) ohne Richtungsänderung auszuleiten, wird das Teilstück (5b) des Geländers (3), durch welches den Gegenständen die quer zur Transportrichtung der Förderbahn (4a,4b) gerichtete Bewegungskomponente gegeben wird, zeitweilig entfernt.

## Beschreibung

Die Erfindung betrifft ein Verfahren und eine Vorrichtung nach dem Oberbegriff des Verfahrensanspruchs 1 und des Vorrichtungsanspruchs 4.

Eine derartige Vorrichtung ist beispielsweise aus der DE PS 3426713 bekannt. Bei dem Stand der Technik wird auf die auszuschleußende Flasche eine Kraft ausgeübt, deren Richtung -bezogen auf die ursprüngliche Bewegungsrichtung der Flasche- seitlich angreift. Die auszuschleußende Flasche erfährt dabei in nachteiliger Weise einen Impuls und es besteht die Gefahr, daß die Flasche durch diesen Stoß aus dem Gleichgewicht gerät und umfällt.

Aus der PCT Schrift WO91/15414 ist eine Sortieranlage für Gegenstände bekannt, bei der schräg zur Transportrichtung der Gegenstände verlaufende Ablenkelemente die transportierten Gegenstände wahlweise seitlich ablenken oder unbeeinflußt lassen. Diese Vorrichtung eignet sich jedoch nur für standfeste Gegenstände wie Pakete oder ähnliches, da die transportierten Gegenstände an die Ablenkelemente anstoßen und an den Ablenkelementen nur einseitig geführt werden. Eine Verwendung bei Flaschen oder anderen wenig standfesten Gegenständen ist nicht möglich.

Es ist daher Aufgabe der Erfindung ein Verfahren anzugeben und eine Vorrichtung zu schaffen, wodurch die Nachteile des Standes der Technik überwunden werden und insbesondere ein sicheres und störungsfreies Ausschleußen der Flaschen möglich ist.

Diese Aufgabe wurde erfindungsgemäß gelöst durch die kennzeichnenden Merkmale des Verfahrensanspruchs 1 und des Vorrichtungsanspruchs 4. Die jeweiligen Unteransprüche betreffen Weiterbildungen und/oder besonders vorteilhafte Ausgestaltungsformen der Erfindung.

Die Überlegungen, die zur Entstehung der Erfindung führten, gingen davon aus, daß der Ausschleulßvorgang auf eine Weise stattfinden sollte, in der die auszuschleußende Flasche ausgeschleußt wird, indem sie ihrer Massenträgheit folgend die Transportstrecke verläßt. Dies geschieht in geeigneter Form an einer Stelle der Transportstrecke an der alle Flaschen um eine Kurve transportiert werden. Durch eine steuerbare Öffnung im Geländer der Transportstrecke können die auszuschleußenden Flaschen dort die Kurve tangential verlassen, ohne seitlich abgelenkt werden zu müssen. Alle übrigen Flaschen werden vom Geländer entlang der vorgegebenen Transportstrecke geführt. Die Flaschen welche nicht ausgeschleußt werden befinden sich in einem Pulk und zwischen den Geländern. Dadurch können sie sich gegenseitig in Laufrichtung stabilisieren und durch das Geländer ist eine seitliche Stabilisierung gegeben.

Die auszuschleußenden Flaschen hingegen treten in der Regel einzeln auf und können sich daher nicht gegenseitig stabilisieren. Auch ist im Bereich der Ausschleußung kein stabilisierendes Geländer vorhanden, welches ein seitliches Umkippen verhindern wurde. Die Gefahr, daß die auszuschleußenden Flaschen umfallen und eine Störung verursachen ist daher groß. Für die Funktionsfähigkeit der Ausschleußung ist es vorteilhaft, wenn die Flaschen beim Ausschleußen keine seitliche Bewegungskomponente erfährt. Bei der vorliegenden Erfindung verläßt eine auszuschleußende Flasche die Transportstecke auf geradem Weg. Aufgrund ihrer Massenträgheit verläßt sie das Förderband geradeaus wesentlich stabiler und ohne Kippmoment. Die Gefahr, daß die so ausgeschleußte Flasche beim Ausschleußen umfällt ist vorteilhaft minimiert.

Nachfolgend wird ein mögliches Ausführungsbeispiel der Erfindung anhand der Bezugszeichenliste und der Zeichnungen näher erläutert.

Es zeigen im einzelnen
- Fig.1: den normalen Verlauf der Transportstrecke
- Fig. 2 u 3: den Verlauf der Transportstrecke beim Ausleiten einer Flasche
- Fig. 4: die Transportstrecke nach dem Ausleiten einer Flasche

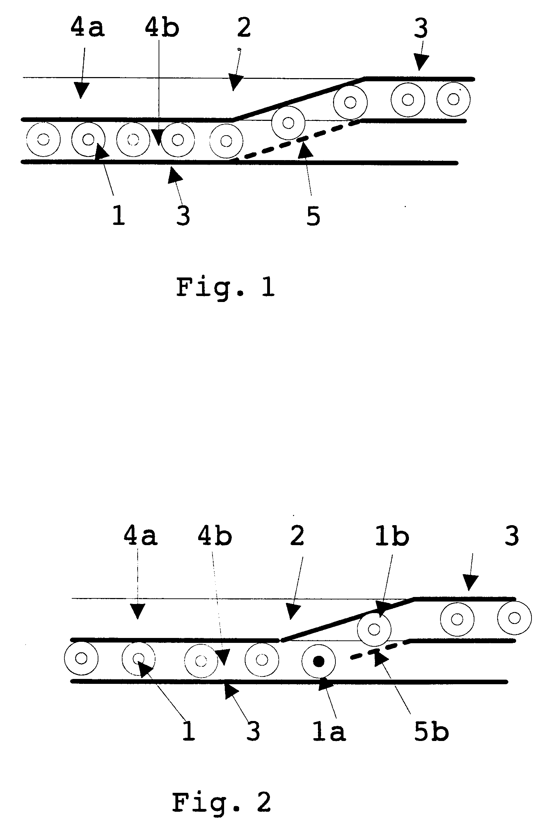

In Figur 1 sind ein Flaschenstrom, bestehend aus einer Vielzahl von Flaschen 1 auf einer Transportbahn 2 zwischen Geländern 3 gezeigt. Der Abstand der Geländer 3 ist auf die Größe der Flaschen 1 abgestimmt. Die Transportbahn 2 besteht aus zwei nebeneinander liegenden Förderbändern 4a und 4b. Das Geländer verläuft so über die Transportbahn 2, daß die Flaschen 1 entlang eines schräg zur Transportrichtung verlaufenden Teilstücks 5 des Geländers 3 von dem Förderband 4a auf das Förderband 4b übergeleitet werden. Die dargestellte Situation betrifft den Normalfall, bei welchem keine der Flasche ausgesondert werden muß. Die Flaschen befinden sich zwischen dem Geländer 3.

Die Figur 2 zeigt nun die Situation, wenn eine der Flaschen 1 aus dem Flaschenstrom ausgesondert wird. Hierzu wird das Teilstück 5 des Geländers genau dann entfernt, wenn die auszusondernde Flasche 1a an der Stelle der Transportbahn 2 ankommt, an der das entfernbare Teilstück 5 beginnt. Das Teilstück 5 des Geländers ist seinerseits nochmals in zwei Bereiche 5a und 5b unterteilt. Der Bereich 5a ist bereits weggeklappt und in dieser Darstellung nicht mehr sichtbar. Die Flasche 1a kann ungehindert geradeaus auf dem Förderband 4b fahren. Der Bereich 5b steht noch in seiner ursprünglichen Position, um die Flasche 1b noch zu führen.

Die Unterteilung des Teilstucks 5 ist speziell dann von Vorteil, wenn die Flaschen 1 mit geringem Abstand zueinander angefördert werden.

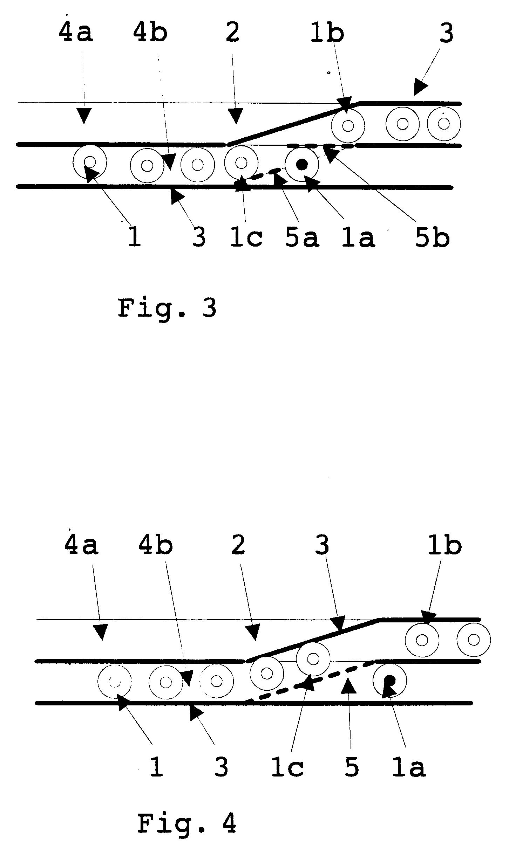

Figur 3 zeigt die nächste Phase des Ausschleußvorgangs. Der Bereich 5a ist bereits wieder in die Normalposition zurückgekehrt. Die nachfolgende Flasche 1c wird bereits wieder in Richtung Förderband 4a abgeleitet. Der Bereich 5b des Geländers ist nun in die Position zum Ausschleußen verschwenkt und blockiert für die Flasche 1a den Weg in Richtung des Transportbandes 4a. Dies ist eine zusätzliche Maßnahme, denn aufgrund der Massenträgheit ist zu erwarten, daß die Flasche 1a weiterhin auf dem Transportband 4b bleibt. Diese zusätzliche Maßnahme dient der Erhöhung der Zuverlässigkeit um zu verhindern, daß eine auszusondernde Flasche etwa verursacht durch ein vorheriges Taumeln soweit seitlich abgelenkt wurde, daß sie zufälligerweise auf das Förderband 4a geraten würde.

Das Teilstück 5 kann wie bereits erwähnt einteilig oder mehrteilig ausgebildet sein, um ein möglichst schnelles Entfernen des Teilstückes 5 zu ermöglichen. Das Teilstück 5 kann horizontal oder vertikal verschwenkt werden. Es kann weggezogen oder auch telekopartig zusammengezogen werden, um den Weg für die auszuschleußenden Flaschen freizumachen.

Die Figur 4 zeigt die Situation nach erfolgter Ausschleußung das Teilstück 5 des Geländers 3 hat wieder seine Normalposition eingenommen, die Flasche 1a befindet sich ausgeleitet auf dem Transportband 4b, die Flasche 1c wechselt gerade von Transportband 4b auf das Transportband 4a.

Die Anwendung der Erfindung ist natürlich nicht begrenzt auf das beschriebene Ausführungsbeispiel sondern ist überall dort anwendbar, wo Gegenstände aussortiert werden müssen.

### Bezugszeichenliste

- 1: Flaschen
- 2: Transportbähn
- 3: Geländer
- 4a,4b: Förderband
- 5: Teilstück

## Patentansprüche

1. Verfahren zum Ausschleusen von auf einer Förderbahn transportierten Gegenständen, insbesondere Flaschen, wobei
- die Gegenstände einspurig auf einer Förderbahn zwischen Geländern transportiert werden und
- durch die Geländer den Gegenständen eine zusätzliche, quer zur Transportrichtung der Förderbahn gerichtete Bewegungskomponente gegeben wird,
dadurch gekennzeichnet, daß
- das Teilstück (5) des Geländers (3), durch welches den Gegenständen (1) die quer zur Transportrichtung der Förderbahn (4a, 4b) gerichtete Bewegungskomponente gegeben wird, zeitweilig entfernt wird, um dem auszuschleusenden Gegenstand (1a) keine Richtungsänderung zu geben

2. Verfahren nach Anspruch 1
dadurch gekennzeichnet, daß
- nachdem ein nicht auszuschleußender Gegenstand (1b) das Teilstück (5) passiert hat und bevor der auszuschleußende Gegenstand (1a) das Teilstück (5) erreicht hat, das Teilstück (5) horizontal oder vertikal abgeklappt wird.

3. Verfahren nach Anspruch 1
dadurch gekennzeichnet, daß
- nachdem ein nicht auszuschleußender Gegenstand (1b) das Teilstück (5) passiert hat und bevor der auszuschleußende Gegenstand (1a) das Teilstück (5) erreicht hat, das Teilstück (5) telekopartig zusammengezogen wird und dadurch eine Lücke im Geländer (3) entsteht

4. Vorrichtung zum Ausschleusen von auf einer Förderbahn transportierten Gegenständen, insbesondere Flaschen, mit
- einer Förderbahn auf der die Gegenstände einspurig zwischen Geländern transportierbar sind und
- die Geländer zumindest in einem Teilbereich schräg zur Transportrichtung der Förderbahn verlaufend angeordnet sind,
dadurch gekennzeichnet, daß
- Mittel zum gesteuerten, zeitweiligen Entfernen des Teilbereichs (5) des Geländers (3) vorgesehen sind, der schräg zur Transportrichtung der Förderbahn (4a, 4b) verlaufend angeordnet ist.

5. Vorrichtung nach Anspruch 4,
dadurch gekennzeichnet, daß
- die Mittel zum gesteuerten, zeitweiligen Entfernen des Teilbereichs (5) des Geländers (3) einen Schwenkmechanismus umfassen, durch welchen der Teilbereich (5) wegschwenkbar ist, nachdem ein nicht auszuschleußender Gegenstand (1b) den Teilbereich (5) passiert hat und bevor der auszuschleußende Gegenstand den Teilbereich (5) erreicht hat.

6. Vorrichtung nach Anspruch 4,
dadurch gekennzeichnet, daß
- die Mittel zum gesteuerten, zeitweiligen Entfernen des Teilbereichs (5) des Geländers (3) einen Teleskopmechanismus umfassen, durch welchen der Teilbereich (5) teleskopartig verkürzbar ist.

7. Vorrichtung nach einem der Ansprüche 4 bis 6,
dadurch gekennzeichnet, daß
- der Teilbereich (5) des Geländers (3), der zeitweilig entfernbar ist aus mehreren Stücken (5a, 5b) besteht und
- für jedes Stück (5a, 5b) des Teilbereichs eigene Mittel zum zeitweiligen Entfernen vorgesehen sind.
